# EUROPÄISCHE PATENTSCHRIFT

(11) **EP 0 639 608 B1**
(45) Veröffentlichungstag und Bekanntmachung des Hinweises auf die Patenterteilung: **09.09.1998**
(21) Anmeldenummer: 94109251.2
(22) Anmeldetag: 16.06.1994
(51) Int. Cl.: C08H 5/00, C08L 97/02, C08G 8/20, C08G 16/02

(54) **Hitzehärtende Bindemittel**
Thermosetting binder
Liant thermodurcissable

(30) Priorität: 21.08.1993 DE 4328220; 26.01.1994 DE 4402159
(43) Veröffentlichungstag der Anmeldung: 22.02.1995
(73) Patentinhaber: Bakelite AG, 58642 Iserlohn-Letmathe (DE)
(72) Erfinder: Pizzi, Antonio, Prof., F-88000 Epinal (FR); Roll, Willi, D-48337 Altenberge (DE); Dombo, Berthold, Dr., D-41061 Mönchengladbach (DE)

(56) Entgegenhaltungen:
- EP-A- 0 544 927
- AU-A- 575 684
- DE-A- 1 907 251
- DE-A- 2 830 631
- DE-U- 9 209 289
- US-A- 4 098 765
- HOLZFORSCHUNG UND HOLZVERWERTUNG, Nr.2, 1993, DE Seiten 30 - 33 A. PIZZI ET AL. 'Comparative and differential behaviour of pine VS. pecan nut tannin adhesives for particleboard'
- HOLZ ALS ROH- UND WERKSTOFF, Bd.40, Nr.1, 1982, BERLIN DE Seiten 13 - 18 C. AYLA ET AL. 'Verleimungsversuche mit tanninformaldehydeharzen aus Rindenextrakten von Pinus brutia Ten.'

## Beschreibung

Die Erfindung betrifft ein Verfahren zur Herstellung von Werkstoffen aus cellulosehaltigen Produkten, insbesondere von Spanplatten wobei Tannine als Bindemittel eingesetzt werden.

Im Zuge der Suche nach natürlichen und insbesondere nachwachsenden Rohstoffen für die Herstellung von Bindemitteln für cellulosehaltige Werkstoffe ist die Verwendung von Tanninen bekannt (J. Macromol. SCI.-Chem. A 16 (7), 1243-1250 (1981).

Trotz guter Verfügbarkeit hat sich ihre Verwendung jedoch nicht durchgesetzt, da die Zugfestigkeit, insbesondere nach Wasserlagerung von tanningebundenen Holzwerkstoffen nicht zufriedenstellend ist.

Aus DE-A-28 30 631 ist bekannt, einen alkalischen Extrakt aus Erdnußschalen und/oder Pekan-Mark mit mindestens 2 Gew.% Protein herzustellen, diesen mit einem Aldehyd und ggf. Phenol umzusetzen und das so erhaltene Harz als Bindemittel für Holzwerkstoffe einzusetzen. Der hier beschriebene zusätzliche Syntheseschritt ist aber in der Praxis unerwünscht.

In "Holz als Roh- und Werkstoff", Bd. 40, Nr.1, 1982, Seiten 13-18 wird offenbart, Tannin aus pinus brutia mit Paraformaldehyd oder Hexamethylentetramin zur Herstellung von wärmehärtbaren Leimen einzusetzen. Diese Leime sind jedoch nur für Verleimung von Holzplatten zu verwenden.

Es ist daher Aufgabe der Erfindung, ein Bindemittel auf Basis der Tannine bereitzustellen, mit dem sich cellulosehaltige Werkstoffe mit wesentlich verbesserten mechanischen Eigenschaften herstellen lassen.

Die Lösung der Aufgabe erfolgt durch ein Verfahren zur Herstellung von Werkstoffen gemäß der Ansprüche 1 bis 6.

Es wurde gefunden, daß Tannine aus der Gruppe der Procyanidine und/oder der Prodelphinidine eine im Vergleich zu anderen Tanninen überragende Bindefähigkeit zeigen, wenn sie zusammen mit Hexamethylentetramin als Bindemittel für Holzspäne eingesetzt werden. Die Zugfestigkeit steigt und erreicht Werte, wie sie z. B. von entsprechenden mit Phenolharz gebundenen Werkstoffen bekannt ist. Der Abfall der Querzugfestigkeit nach Wasserlagerung ist deutlich reduziert und ebenso sind die Quellwerte in kochendem Wasser vermindert.

Dabei ist von weiterem Vorteil, daß diese Tannine ohne Aufschlußbehandlung, wie sie von anderen Tanninen bekannt ist, eingesetzt werden können.

Entsprechende Tannine sind solche aus der Gruppe der Kiefernrinde oder der Pekan-Nuß. Abmischungen dieser Tannine mit z.B. Minosa- oder Quebracho-Tannin im Verhältnis 2:5 bis 5:2 haben zwar eine verlängerte Aushärtungszeit, lassen sich aber noch einsetzen. Diese Tannine sind handelsübliche Produkte und werden bislang vorwiegend als Gerbmittel verwendet. Die Handelsqualität ist für den erfindungsgemäßen Einsatz ausreichend.

Sie werden mit Hexamethylentetramin (Hexa) gemischt, wobei im Bindemittel der Anteil an Hexamethylentetramin 3,0 bis 9 Gew.-%, bezogen auf Tannin, beträgt.

Es liegt aber ebenso im Bereich der Erfindung, wenn das Bindemittel neben der speziellen Tanninsorte und Hexa bis zu 50 Gew.-% eines Novolaks oder bis zu 20 Gew.-% einer mindestens difunktionellen Isocyanatverbindung, wie z. B. Diisocyanatonaphthalin, 4,4',4''-Triisocyanato-triphenylmethan, Isophoron-, Toluol- oder Hexamethylendiisocyanat oder Diisocyanato-diphenylmethan (MDI) enthält, wobei in der praktischen Anwendung die Di- oder Polyisocyanate parallel zu dem trockenen Gemisch aus dem erfindungsgemäß einzusetzenden Tannin und Hexamethylentetramin auf die cellulosehaltigen Produkte aufgebracht werden, bevor diese zu den entsprechenden Werkstoffen verpreßt werden.

Entsprechende cellulosehaltige Produkte, sind z. B. Holzspäne, Fasern auf Cellulosebasis wie z.B. Baumwolle oder Flachs oder auch Stroh, aus denen Spanplatten, Textilvlies oder Schall- und Wärmedämmplatten hergestellt werden.

Die Herstellung der Werkstoffe erfolgt in der Art, daß die erfindungsgemäß verwendeten Bindemittel mit cellulosehaltigen Produkten vermischt, das Gemisch in eine Form gebracht und bei einer Temperatur oberhalb der Zersetzungstemperatur des Formaldehyd freisetzenden Stoffes und unterhalb der Zersetzungstemperatur des Tannins, bevorzugt bei 150 bis 210 °C unter Druck gehärtet werden. Der Druck liegt dabei, je nach Einsatzmaterial und gewünschter Dichte im Bereich von 0,1 bis 4 MPa.

So ist z. B. auch die Herstellung dreilagiger Spanplatten möglich, mit einem Druck von 2 bis 3,5 MPa.

Die Menge des Bindemittels liegt je nach gewünschtem Werkstoff und gewünschter Festigkeit im Bereich von 4 bis 20 Gew.-%, bezogen auf das cellulosehaltige Produkt. Das Bindemittel kann als Feststoffgemisch vorliegen oder als Lösung der Komponenten in Wasser, Alkohol oder Wasser-Alkohol-Gemischen. vorliegen oder als Lösung der Komponenten in Wasser, Alkohol oder Wasser-Alkohol-Gemischen.

Entsprechende Lösungen sind bei Raumtemperatur mehrere Wochen ohne großen Viskositätsanstieg lagerfähig. Bei wäßrigen Lösungen empfiehlt sich lediglich die Zugabe eines Fungizids um einen evtl. Pilzbefall zu verhindern.

Die folgenden Beispiele zeigen das erfindungsgemäße Verfahren zur Herstellung von Spanplatten.

### Beispiele

Holzspäne werden mit wäßrig-alkoholischer Lösung, die 11 Gew.-% des Holzes an Bindemittel enthält, besprüht und getrocknet. Danach werden sie in an sich bekannter Weise (2,5 N/mm²; 195 °C) zu Platten der Dimension 400 x 350 x 12 mm geformt, gepreßt und gehärtet.

Bestimmt werden die Dichte, die Querzugfestigkeit der Platten a. trocken und b. nach Wasserlagerung (2 Stunden in kochendem Wasser, danach 16 Stunden bei 105 °C getrocknet) sowie die Dickenquellung nach 2-stündiger Lagerung in kochendem Wasser unter Variation der Mischungsverhältnisse der Bindemittelkomponenten, der Bindemittelmenge und der Preßzeit.

### Beispiele 1 - 5

Bei Beispiel 1 variiert der Anteil an Hexamethylentetramin von 7,5 bis 5,5 % des Bindemittel. Entsprechend variiert auch der Anteil an Pekan-Nuß-Tannin von 92,5 bis 94,5 %.

In Beispiel 2 beträgt der Anteil an Hexamethylentetramin, bezogen auf Tannin, 6,4 %, d. h., der Anteil an Pekan-Nuß-Tannin 93,6 %. Variiert werden die Preßzeiten.

Beispiel 3 zeigt Werte einer dreilagigen Spanplatte bei 6,4 % Hexamethylentetramin im Bindemittel, einem Bindemittelgehalt von 10 % in der inneren und von 12 % in den äußeren Lagen.

Beispiele 4 und 5 zeigen die analogen Werte zu den Beispielen 1 und 2 bei Einsatz von Mimosa (Wattle)-Tannin.

Die folgenden Tabellen zeigen die erhaltenen Werte:

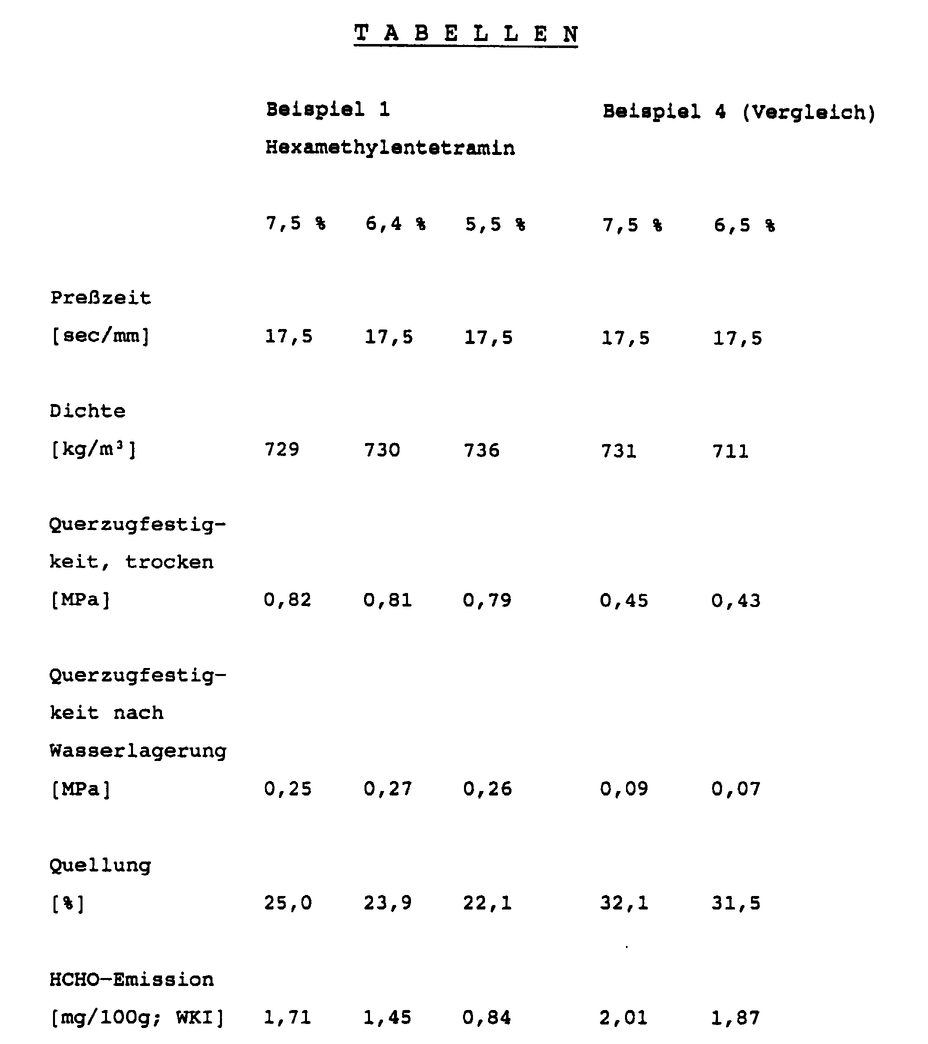

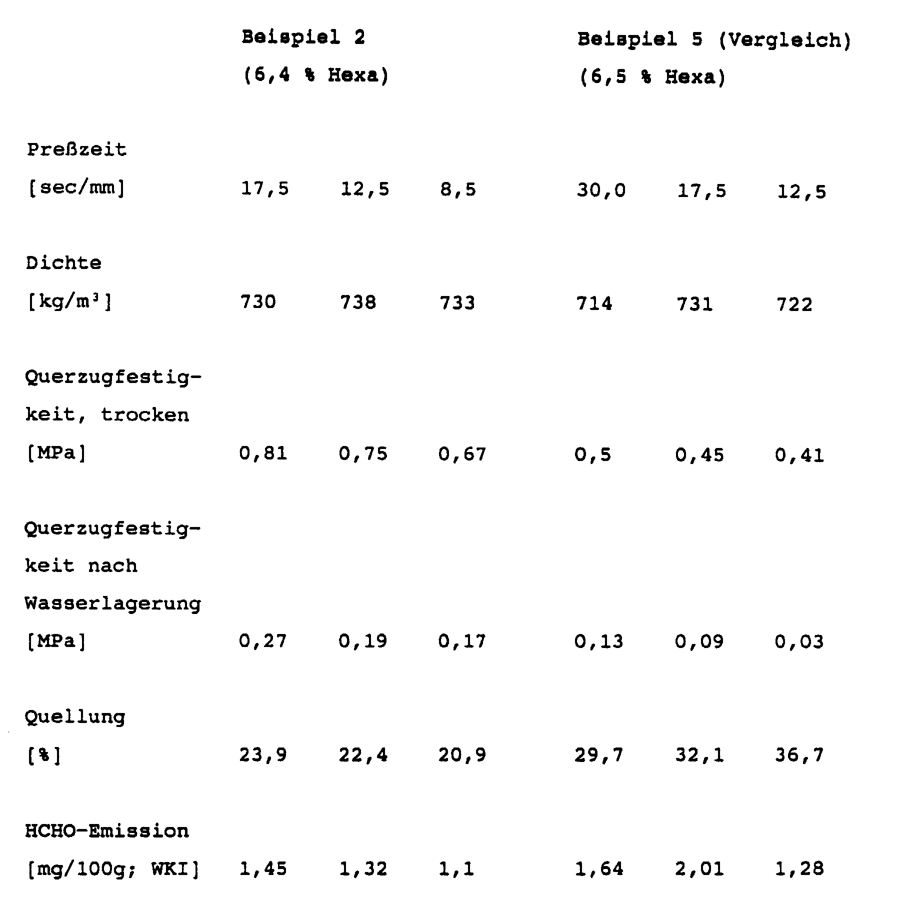

| Beispiel 3 | |
|---|---|
| Preßzeit [sec/mm) | 12,5 |
| | |
| Bindemittel [%] Mittel-/Deckschicht | 10/12 |
| | |
| Feuchtigkeit der Späne nach Beleimung [%] Mittel-/Deckschicht | 28/26 |
| | |
| Dichte [kg/m³] | 723 |
| | |
| Querzugfestigkeit trocken [MPa] | 0,83 |
| | |
| Querzugfestigkeit nach Wasserlagerung [MPa] | 0,27 |
| | |
| Quellung [%] | 22,1 |
| | |
| HCHO-Emission [mg/100g; WKI] | 1,4 |

### Beispiel 6

Gemäß der allgemeinen Beschreibung der Beispiele (Preßzeit 15 s/mm bei 190 °C, 2,5 N/mm²) werden einlagige Spanplatten hergestellt und getestet.

| Bindemittel: | |
|---|---|
| Tannin aus Kiefernrinde (37 %ige wäßrige Lösung) | 337 Gewichtsteile |
| Hexamethylentetramin (40 %ige wäßrige Lösung) | 19,3 Gewichtsteile |
| Zinkacetat (25 %ige wäßrige Lösung) | 19,3 Gewichtsteile |
| Wasser | 10 Gewichtsteile |

| Ergebnisse: | |
|---|---|
| Dichte (kg/m³) | 708 |
| Querzugfestigkeit, trocken (MPa) | 0,80 |
| Querzugfestigkeit nach Wasserlagerung (MPa) | 0,23 |
| HCHO-Emission (mg/100 g) | 0,1 |

### Beispiel 7

Gemäß der allgemeinen Beschreibung der Beispiele (Preßzeit 15 s/mm bei 190 °C; 2,5 N/mm²) werden dreilagige Spanplatten hergestellt und getestet

| Bindemittel | Kernlage | Außenlagen |
|---|---|---|
| Tannin aus Kiefernrinde (37 %ige wäßrige Lösung) | 327 | 327 Gewichtsteile |
| Hexamethylentetramin (40 %ige wäßrige Lösung) | 19,5 | 19,5 Gewichtsteile |
| Zinkacetat (25 %ige wäßrige Lösung) | 24,0 | 19,5 Gewichtsteile |
| Wasser | 12 | --- Gewichtsteile |

| Ergebnisse: | |
|---|---|
| Dichte (kg/m³) | 723 |
| Querzugfestigkeit, trocken (MPa) | 0,80 |
| Querzugfestigkeit nach Wasserlagerung (MPa) | 0,29 |
| HCHO-Emission (mg/100 g) | 0,16 |

## Patentansprüche

1. Verfahren zur Herstellung von Werkstoffen aus der Gruppe Spanplatten, Textilvlies, Schall- und Wärmedämmplatten durch Vermischen eines Bindemittels mit cellulosehaltigen Produkten, Einbringen des Gemisches in eine Form und Behandlung bei einer Temperatur im Bereich von 150-210° C und einem Druck im Bereich von 0,1 bis 4 MPa, **dadurch gekennzeichnet**, daß das Bindemittel Tannin aus der Gruppe der Procyanidine und/oder der Prodelphinidine,insbesondere Tannin der Pekan-Nuß und/oder der Kiefernrinde sowie Hexamethylentetramin enthält.

2. Verfahren nach Anspruch 1, **dadurch gekennzeichnet,** daß der Anteil an Hexamethylentetramin 3,0 bis 9 Gew.-%, bezogen auf Tannin, beträgt.

3. Verfahren nach den Ansprüchen 1 und 2, **dadurch gekennzeichnet,** daß das Bindemittel bis zu 50 Gew.-% eines Novolaks enthält.

4. Verfahren nach den Ansprüchen 1 und 2, **dadurch gekennzeichnet,** daß das Bindemittel bis zu 20 Gew.-% einer mindestens difunktionellen Isocyanatverbindung enthält.

5. Verfahren nach Anspruch 1, **dadurch gekennzeichnet,** daß das Bindemittel als Pulver mit den cellulosehaltigen Produkten vermischt wird.

6. Verfahren nach Anspruch 1, **dadurch gekennzeichnet,** daß das Bindemittel als Lösung auf die cellulosehaltigen Produkte aufgesprüht wird.

## Claims

1. A process for preparing materials of the group of particle boards, textile fleece, sound and heat absorbing plates by mixing a binder with cellulose-containing products, introducing the mixture into a mould and treating it at a temperature in the range of from 150-210°C and at a pressure in the range of from 0.1 to 4 MPa, characterized in that the binder contains tannin of the group of the procyanidines and/or of the prodelphinidines, particularly tannin from peka nut and/or pine bark as well as hexamethylenetetramine.

2. A process according to claim 1, characterized in that the portion of hexamethylenetetramine is from 3.0 to 9 % by weight relative to tannin.

3. A process according to claims 1 and 2, characterized in that the binder contains up to 50 % by weight of a novolak.

4. A process according to claims 1 and 2, characterized in that the binder contains up to 20 % by weight of an at least bifunctional isocyanate compound.

5. A process according to claim 1, characterized in that the binder is mixed as a powder with the cellulose-containing products.

6. A process according to claim 1, characterized in that the binder is sprayed as a solution onto the cellulose-containing products.

## Revendications

1. Procédé pour la préparation de matériaux du groupe des panneaux de particules, des non tissés, des panneaux isolants phoniques et thermiques par mélange d'un liant avec des produits contenant de la cellulose, introduction du mélange dans un moule et traitement à une température dans la plage de 150-210°C et une pression dans la plage de 0,1 à 4 MPa, caractérisé en ce que le liant contient un tanin du groupe des procyanidines et/ou des prodelphinidines, notamment du tanin de noix de pécan et/ou d'écorce de pin ainsi que de l'hexaméthylènetétramine.

2. Procédé selon la revendication 1, caractérisé en ce que la proportion d'hexaméthylènetétramine est de 3,0 à 9% en poids, rapportés au tanin.

3. Procédé selon les revendications 1 et 2, caractérisé en ce que le liant contient jusqu'à 50% en poids d'une novolaque.

4. Procédé selon les revendications 1 et 2, caractérisé en ce que le liant contient jusqu'à 20% en poids d'un composé isocyanate au moins difonctionnel.

5. Procédé selon la revendication 1, caractérisé en ce que le liant est mélangé sous forme de poudre avec les produits contenant de la cellulose.

6. Procédé selon la revendication 1, caractérisé en ce que le liant est pulvérisé sous forme de poudre sur les produits contenant de la cellulose.
